# EUROPEAN PATENT SPECIFICATION

(11) **EP 4 001 526 B1**
(45) Date of publication and mention of the grant of the patent: **01.01.2025**
(21) Application number: 21209349.6
(22) Date of filing: 19.11.2021
(51) Int. Cl.: E03D 1/14, E03D 5/10, G01F 23/18, E03D 1/32

(54) **LEVEL SENSOR UNIT FOR LEVEL MEASUREMENTS IN A FLUSHING TANK**
FÜLLSTANDSSENSOREINHEIT FÜR FÜLLSTANDSMESSUNGEN IN EINEM SPÜLKASTEN
UNITÉ DE CAPTEUR DE NIVEAU POUR MESURES DE NIVEAU DANS UN RÉSERVOIR DE CHASSE D'EAU

(30) Priority: 20.11.2020 IT 202000027930
(43) Date of publication of application: 25.05.2022
(73) Proprietor: OLI - SISTEMAS SANITARIOS, S.A., 3800-314 Aveiro (PT)
(72) Inventor: SILVA PEREIRA, Marcelo, 3800-314 AVEIRO (PT); BATISTA CRUZ, Pedro Miguel, 3800-314 AVEIRO (PT); MOURA DE OLIVEIRA, Antonio Manuel, 3800-314 AVEIRO (PT)
(74) Representative: Studio Torta S.p.A.

(56) References cited:
- EP-A1- 3 418 457
- DE-A1- 10 238 964
- FR-A1- 2 564 969
- US-A1- 2014 033 817
- US-A1- 2018 292 250

## Description

### CROSS-REFERENCE TO RELATED APPLICATIONS

This patent application claims priority from Italian patent application no. 102020000027930 filed on November 20, 2021.

### TECHNICAL FIELD

The present invention relates to a level sensor unit for water level measurements in a flushing tank of a sanitary appliance.

### STATE OF THE PRIOR ART

As is known, a flushing tank of a sanitary appliance contains a certain amount of water, which reaches a certain level in the tank; when the water contained in the tank is flushed, by means of a suitable flushing valve, the water level is restored by feeding water into the tank through a feeding device connected to the water mains. When the preset level is reached, the filling device, for example operated by a float, stops the water supply.

Especially in order to avoid waste and reduce water consumption, there is a need to carefully check the amount of water in the tank, so as to detect any leaks, monitor consumption, etc.

In general, the known flushing tanks are not equipped with water level measuring devices.

On the other hand, placing level sensors inside a flushing tank poses major problems.

In particular, there are problems of installation and accessibility, also for maintenance and inspection, since the inside of the flushing tanks is normally not very accessible; problems in supplying the sensors; problems in transmitting the data detected by the sensors outside the tank.

Moreover, it is extremely difficult to equip an already installed flushing tank, in particular a flushing tank embedded in a wall, with a level sensor device.

US2014033817A1 discloses an apparatus for measuring level of a process fluid in a container. The apparatus includes a remote seal configured to be inserted into the container through an opening and configured to receive a pressure related to the level of process fluid in the container. A capillary tube filled with a fill fluid extends from the remote seal to the opening and is configured to convey the pressure therebetween. A pressure sensor coupled to the capillary tube senses the pressure from the capillary tube and responsively determines the level of the process fluid in the container. In an embodiment, a single differential pressure sensor is used, while in another example embodiment, two separate pressure sensors are employed and the difference between their two outputs is used in determining level of process fluid; the level measurement device is powered by wires and can communicates information wirelessly.

The present invention aims to solve the above mentioned problems, particularly by providing a simple, effective and reliable level sensor unit for flushing tanks of sanitary appliances, which can easily be placed in a flushing tank, even if already installed (and even if embedded in a wall), and allows accurate and reliable level data to be transmitted, so that such data can be used for remote monitoring of the volumes of water discharged, management of water consumption, etc.

### OBJECT OF THE INVENTION

Therefore, the present invention relates to a level sensor unit for level measurements in a flushing tank, as defined essentially in the appended claim 1 and, in its additional features, in the dependent claims.

The level sensor unit according to the invention is an integrated self-powered unit provided with a wireless transmitter for transmitting the detected level data to an external receiver, without requiring any kind of cable connections, neither for data transmission nor for powering the components of the device.

The unit is removable and retrofittable and incorporates a battery powered by a turbine power supply unit, operated by a flow of water taken from the water mains, so as to be energy self-sufficient.

The unit of the invention can also easily be installed on flushing tanks already in use and even embedded in a wall, thus allowing the adaptation thereof without requiring physical changes to the system or construction or demolition works.

The invention allows information on the state of a flushing tank to be acquired in a simple and effective way: the unit of the invention does not require connections to an external power supply (since the unit is fully self-powered and low-consumption) and is able to communicate the detected data wirelessly, with low power consumption.

The unit of the invention can communicate data to an external unit, for example, for monitoring the current and past states of the flushing tank. For example, the data detected by the unit is transmitted to a server which logs the tank's operating data: the unit detects the discharge volume of the tank, provides detection of any leaks and other malfunctions, and communicates the data to an online platform which then provides various analysis functions such as predictive maintenance and life cycle monitoring, water usage logging and analysis, automatic maintenance alerts, etc.

Advantageously, the unit of the invention employs pressure sensors, which detect the atmospheric pressure and the pressure of the water column to determine the water level inside the tank.

### BRIEF DESCRIPTION OF THE DRAWINGS

Further features and advantages of the present invention will be apparent from the following description of a non-limiting embodiment thereof, with reference to the figures of the accompanying drawings, wherein:
- Figure 1 is a longitudinal sectional view of a flushing tank for sanitary appliances, which is provided with a level sensor unit according to the invention;
- Figure 2 is a perspective view of the flushing tank in Figure 1, shown during the installation of the level sensor unit according to the invention;
- Figure 3 is a perspective view of the level sensor unit in Figure 1;

- Figure 4 is an exploded perspective view of the level sensor unit in Figure 3;
- Figure 5 is a view in enlarged scale and with parts removed for clarity of a detail of the level sensor unit in Figure 3;
- Figures 6 and 7 are perspective views, with parts removed for clarity, of further details of the level sensor unit in Figure 3.

### PREFERRED EMBODIMENT OF THE INVENTION

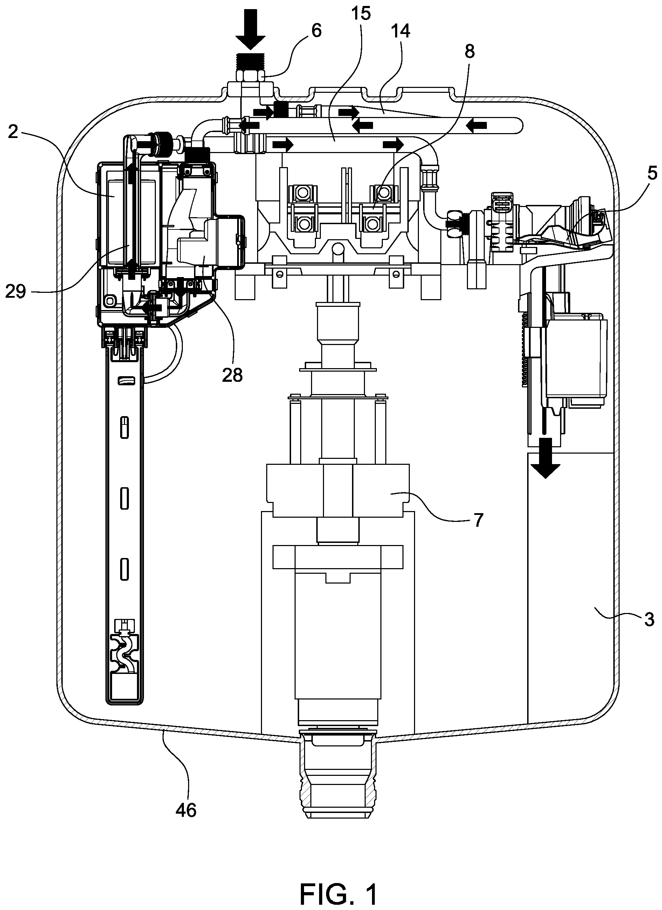

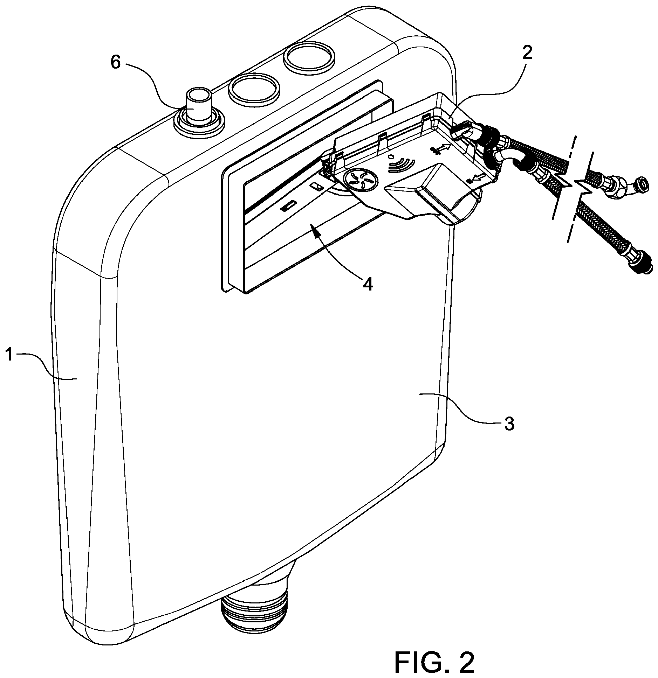

Figures 1 and 2 show a flushing tank 1 of a sanitary appliance, in particular of the built-in type, equipped with a level sensor unit 2 for measuring the water level in the tank 1.

The tank 1 may be of any known type.

In general, the tank 1 comprises a reservoir 3 having an inspection opening 4 and housing a filling valve 5, connected to a supply fitting 6 for connection to a water mains network, and a flushing valve 7, which can be operated by a user by means of an actuator device 8.

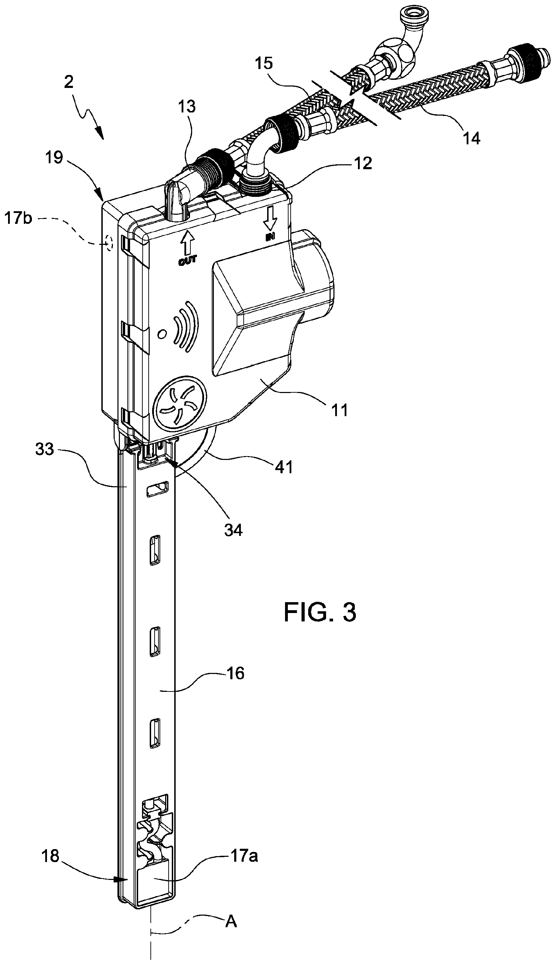

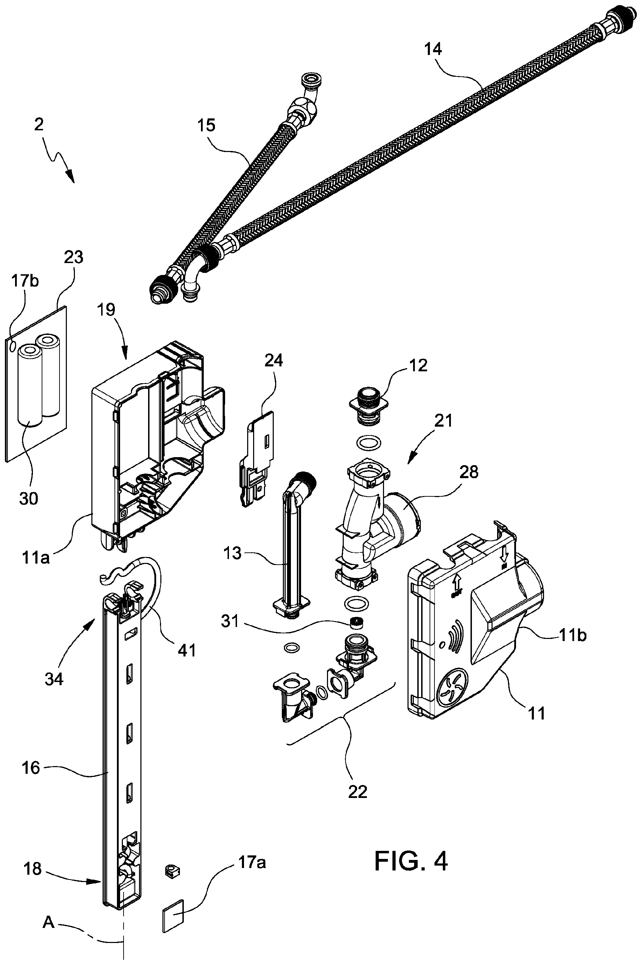

Also with reference to Figures 3-6, the sensor unit 2 comprises a casing 11, provided with a pair of joints 12, 13 connected to an inlet pipe 14 and an outlet pipe 15, respectively; a sensor-holder bar 16, projecting from and hinged to the casing 11; a bottom sensor 17a, positioned at a free lower end 18 of the bar 16 opposite to the casing 11; and a top sensor 17b, positioned on the casing 16 at an upper end 19 of the casing 16.

The casing 11, for example, is formed by a pair of coupled shells 11a, 11b defining an internal cavity 20, which houses an electric power supply group 21 and a control unit 23.

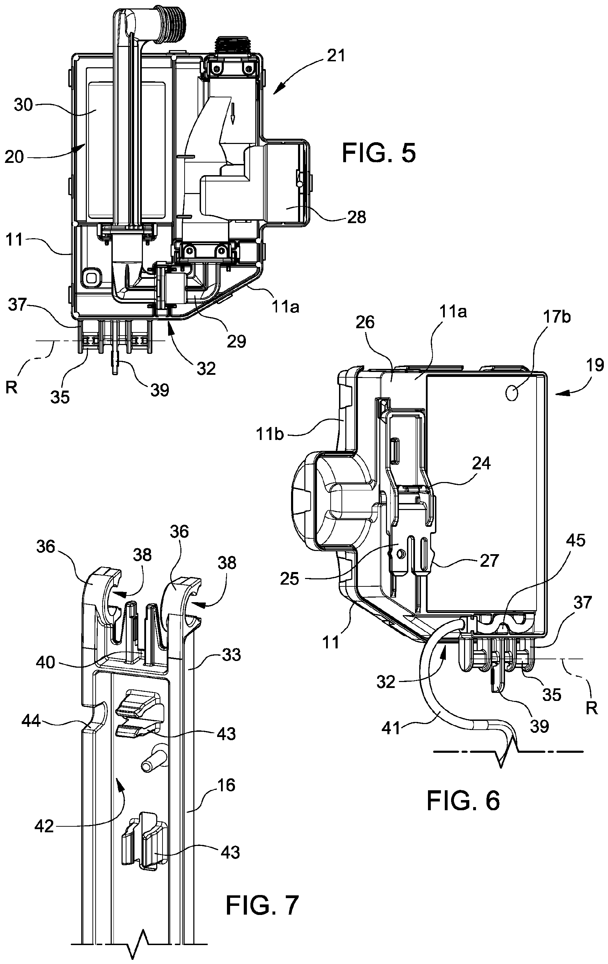

The casing 11 is provided with a fastening device 24 for fastening the unit 2 inside the reservoir 3. For example, as shown in greater detail in Figure 6, the fastening device 24 comprises a hook 25 extending from a side wall 26 of the casing 11, parallel to the side wall 26 of the casing 11 and spaced therefrom so as to engage a corresponding seat (not shown) formed inside the reservoir 3. Preferably, the hook 25 is provided with a snap-locking tooth 27 for securing the hook 25 in the respective seat.

According to the present invention, the electric power supply group 21 comprises a hydroelectric generation unit 28 located along a hydraulic circuit 29, and the control unit 23 incorporating rechargeable batteries 30.

However, by way of example, the electric power supply group 21 can be of another type. For example, the group 21 may comprise an AC power supply connectable to the electricity network via a cable; and/or batteries rechargeable via a cable connectable to an external charger; and/or replaceable non-rechargeable batteries; etc.

The circuit 29, possibly formed by several pieces of piping and/or joints, extends between the joints 12, 13 and connects the joints 12, 13 so as to circulate a flow of water through the hydroelectric generation unit 28.

The hydroelectric generation unit 28 comprises a hollow body inside which (not shown) there are a turbine, driven by the flow of water circulating in the hydraulic circuit, and a current generator driven by the turbine and connected to the control unit 23 to recharge the batteries 30.

Advantageously, the circuit 29 is internally provided with a flow regulator 31, for example located downstream of the hydroelectric generation unit 28 in the direction of circulation of the water flow in the circuit 29 and for example at the outlet of the hydroelectric generation unit 28.

The control unit 23, for example a printed circuit electronic board, is connected to the hydroelectric generation unit 28, the batteries 30, the sensor 17a and the sensor 17b, so as to control the operation of the unit 2, as described below. The control unit 23 is advantageously sealed in a fluid-tight manner inside the casing or in a special waterproof sheath (not shown). The control unit 23 is provided with a wireless transmitter for transmitting data to the outside.

The sensor-holder bar 16 extends from a lower edge of the casing along a substantially rectilinear, longitudinal axis A between an upper end 33, hinged to the bar 16, and the free lower end 18, provided with the sensor 17a.

The bar 16 is hinged to the casing 11 by a hinge 34 so as to rotate with respect to the bar 16 about a rotation axis R, substantially perpendicular to the longitudinal axis A of the bar 16.

For example, the hinge 34 is formed by a pin 35 (possibly divided into several pin portions) defining the rotation axis R and by one or more teeth 36 which engage the pin 35 (or respective pin portions), carried by the casing 11 and the bar 16, respectively, or vice versa.

In the non-limiting example shown, the pin 35 is carried by a support 37 projecting from the edge 32 of the casing 11; the bar 16 has a pair of teeth 36, which project from the end 33 of the bar 16 and have respective rotation seats 38, which are substantially C-shaped and engage the pin 35.

The hinge 34 optionally comprises a stop member 39 which limits the rotation of the bar 16 with respect to the casing 11; for example, the stop member 39 projects from the edge 32 beyond the pin 35 and engages an abutment 40 formed at the end 33 of the bar 16.

The stop member 39 is shaped so as to allow the rotation of the bar 16 with respect to the casing 11 about the axis R in one direction of rotation, and to prevent the rotation in the opposite direction.

The sensor 17a is located at the end 18 of the bar 16 and is connected to the control unit 23, for example, by a wire 41. The sensor 17b is located at the upper end 19 of the casing 1, for example integrated in the control unit 23, i.e., forming part of the same printed circuit electronic board, or connected thereto.

The wire 41 is preferably housed (Figure 7) in a longitudinal cavity 42 of the bar 16, for example open on one side of the bar 16 and is retained by a plurality of stops 43 located along the bar 16 and shaped so as to snap-engage the wire 41. The wire 41 protrudes from the cavity 42 at the end 33 of the bar 16, for example through a slot 44, and enters the casing 11, where it is fixed, for example, by a further stop 45 (Figure 6).

Each of the sensors 17a, 17b is a pressure sensor, configured to detect the pressure acting on the sensor 17a, 17b. In particular, each sensor 17a, 17b has a flexible membrane sensitive to pressure changes acting on the membrane, and an integrated microprocessor, which detects membrane displacements due to the pressure changes and translates them into signals which are sent to the control unit 23. In use, the bottom sensor 17a is immersed in the water contained in the tank 1 and its membrane is therefore exposed to the water column contained in the tank 1; whereas the top sensor 17b is located above the water filling level of the tank 1 and therefore its membrane is exposed to atmospheric air.

Advantageously, the sensor 17a is sealed in a fluid-tight manner, with the membrane exposed to contact with water.

Figure 2 shows the installation of the unit 2 in the flushing tank 1.

The unit 2 is inserted in the tank 1 through the inspection opening 4, also by exploiting the possibility, thanks to the hinge 34, of rotating and therefore tilting the bar 16 (by rotating the bar 16 about the rotation axis R) with respect to the casing 11.

Once the unit 2 is inside the reservoir 3 of the tank 1, the unit 2 is fastened by means of the fastening device 24, by inserting the hook 25 in the respective seat inside the reservoir 3.

The bar 16 is returned to the vertical position, with the axis A parallel to the casing 11.

The unit 2 and particularly the bar 16 are sized so that the sensor 17a, located at the end 18 of the bar 16, in use is close to a bottom wall 46 of the tank 1; and the sensor 17b, located at the upper end 19 of the casing 11, is above the maximum water level in the tank 1.

Advantageously, the casing 11 is made in a single, fixed-size version, and the bar 16 is made in two or more different dimensions (lengths), so that, by selecting the suitable bar 16, the unit 2 can be adapted to different tanks 1, with the sensor 17a still positioned close to the bottom wall 46 of the tank 1.

The supply fitting 6 of the tank 1, which is normally connected directly to the filling valve 5, instead, is connected to the inlet pipe 14 of the unit 2 (Figure 1); the outlet pipe 15 is connected to the filling valve 5.

As indicated by the arrows in Figure 1, therefore, the water coming from the water mains through the supply fitting 6 first flows into the unit 2, operating in particular the hydroelectric generation unit 28, and then reaches the filling valve 5 to fill the tank.

The sensors 17a, 17b are configured so as to calculate the water level in the tank 1 by means of differential pressure values detected by the bottom sensor 17a, immersed in water in the tank 1, and the top sensor 17b, exposed to atmospheric pressure.

In particular, the sensors 17a, 17b read the pressure of the water column in the tank 1 and the atmospheric pressure, respectively, in order to determine the water level inside the tank 1 on the basis of the detected pressure difference, so as to also compensate for any changes in the atmospheric pressure. In particular, the sensor 17a detects changes in pressure due to changes in the water level in the tank 1, both due to the discharge and filling cycles of the tank 1, and due to any leaks or malfunctions. The microprocessors of the sensors 17a, 17b use the detected pressure data to determine the water level, possibly also associating a time stamp to the pressure readings to provide a data model that is communicated to the server. The sensor 17a and the sensor 17b transmit the detected data to the control unit 23, which in turn transmits the data to the outside wirelessly.

In one embodiment of the invention, both sensors 17a, 17b are configured to detect not only the pressure but also the temperature, independently. The sensors 17a, 17b thus detect the temperature of the water in the tank 1 and of the surrounding air, respectively: the temperature data is used by the control unit 23 to correct mathematical deviations in the air and water properties that vary with the temperature, as well as to detect whether or not the unit 1 is in the correct operating conditions.

It is understood that numerous modifications and variations can be made to the level sensor unit as described and illustrated herein without departing from the scope of the claims appended hereto.

## Claims

1. A level sensor unit (2) for measuring the water level in a flushing tank (1) of a sanitary appliance, comprising a casing (11) provided with a pair of joints (12, 13) connectable to an inlet pipe (14) and an outlet pipe (15) respectively; an electric power supply group (21) and a control unit (23) provided with a wireless transmitter, housed in the casing (11); a sensor-holder bar (16), projecting from the casing (11) along a longitudinal axis (A); a bottom sensor (17a), positioned at a free lower end (18) of the bar (16) opposite to the casing (11); and a top sensor (17b), positioned at an upper end (19) of the casing (16); wherein the sensors (17a, 17b) are pressure sensors configured so as to detect pressure changes and calculate the water level in the tank (1) by differential pressure values detected by the bottom sensor (17a), immersed in water in the tank (1), and the top sensor (17b), exposed to atmospheric pressure; and wherein the sensors (17a, 17b) are connected to the control unit (23) to transmit data detected by the sensors (17a, 17b) outside the tank (1); and wherein the electric power supply group (21) comprises a hydraulic circuit (29) extending between the joints (12, 13), a hydroelectric generation unit (28), arranged along the circuit (29), and one or more rechargeable batteries (30); and the circuit (29) connects the joints (12, 13) so as to circulate a water flow through the hydroelectric generation unit (28).

2. A unit according to claim 1, wherein the electric power supply group (21) comprises an AC power supply connectable to an electricity network; and/or batteries rechargeable via a cable connectable to an external charger; and/or replaceable non-rechargeable batteries.

3. A unit according to one of the preceding claims, wherein the bar (16) is hinged to the casing (11) by a hinge (34) so as to rotate with respect to the bar (16) about a rotation axis (R), substantially perpendicular to the longitudinal axis (A) of the bar (16).

4. A unit according to one of the preceding claims, wherein the bottom sensor (17a) is connected to the control unit (23) by a wire (41), housed in a longitudinal cavity (42) of the bar (16) and held by a plurality of clips (43) positioned along the bar (16) and shaped so as to clamp the wire (41).

5. A unit according to one of the preceding claims, comprising a fastening device (24) for fastening the unit (2) inside a flushing tank (1).

6. A flushing tank (1) for a sanitary appliance, equipped with a level sensor unit (2) according to one of the preceding claims.

7. A tank according to claim 6, wherein the bottom sensor (17a) is immersed in the water contained in the tank (1) and the top sensor (17b) is located above the water filling level of the tank (1).

## Patentansprüche

1. Niveausensoreinheit (2) zum Messen des Wasserstands in einem Spülkasten (1) eines Sanitärgeräts, umfassend ein Gehäuse (11), das mit einem Paar von Gelenken (12, 13) versehen ist, die mit einem Einlassrohr (14) und einem Auslassrohr (15) verbunden werden können; eine elektrische Stromversorgungsgruppe (21) und eine Steuereinheit (23), die mit einem drahtlosen Sender versehen ist, der in dem Gehäuse (11) untergebracht ist; eine Sensorhaltestange (16), die von dem Gehäuse (11) entlang einer Längsachse (A) vorsteht; einen unterseitigen Sensor (17a), der an einem freien unteren Ende (18) der Stange (16) gegenüber dem Gehäuse (11) positioniert ist; und einen oberseitigen Sensor (17b), der an einem oberen Ende (19) des Gehäuses (16) positioniert ist; wobei die Sensoren (17a, 17b) Drucksensoren sind, die so konfiguriert sind, dass sie Druckänderungen detektieren und den Wasserstand in dem Kasten (1) anhand von Differenzdruckwerten berechnen, die von dem unterseitigen Sensor (17a), der in Wasser in dem Kasten (1) eingetaucht ist, und dem oberseitigen Sensor (17b), der atmosphärischem Druck ausgesetzt ist, detektiert werden; und wobei die Sensoren (17a, 17b) mit der Steuereinheit (23) verbunden sind, um von den Sensoren (17a, 17b) detektierte Daten außerhalb des Kastens (1) zu übertragen; und wobei die elektrische Stromversorgungsgruppe (21) einen hydraulischen Kreislauf (29), der sich zwischen den Gelenken (12, 13) erstreckt, eine hydroelektrische Erzeugungseinheit (28), die entlang des Kreislaufs (29) angeordnet ist, und eine oder mehrere wiederaufladbare Batterien (30) umfasst; und der Kreislauf (29) verbindet die Gelenke (12, 13), sodass ein Wasserstrom durch die hydroelektrische Erzeugungseinheit (28) zirkuliert.

2. Einheit nach Anspruch 1, wobei die elektrische Stromversorgungsgruppe (21) eine an ein Stromnetz anschließbare Wechselstromversorgung und/oder Batterien, die über ein an ein externes Ladegerät anschließbares Kabel wiederaufladbar sind, umfasst.

3. Einheit nach einem der vorhergehenden Ansprüche, wobei die Stange (16) durch ein Scharnier (34) an dem Gehäuse (11) angelenkt ist, so dass sie sich in Bezug auf die Stange (16) um eine Drehachse (R) dreht, die im Wesentlichen senkrecht zur Längsachse (A) der Stange (16) verläuft.

4. Einheit nach einem der vorhergehenden Ansprüche, wobei der unterseitige Sensor (17a) mit der Steuereinheit (23) durch einen Draht (41) verbunden ist, der in einem Längshohlraum (42) der Stange (16) untergebracht ist und von einer Vielzahl von Klammern (43) gehalten wird, die entlang der Stange (16) positioniert und so geformt sind, dass sie den Draht (41) einklemmen.

5. Einheit nach einem der vorhergehenden Ansprüche, umfassend eine Befestigungsvorrichtung (24) zur Befestigung der Einheit (2) in einem Spülkasten (1).

6. Spülkasten (1) für ein Sanitärgerät, ausgestattet mit einer Niveausensoreinheit (2) nach einem der vorhergehenden Ansprüche.

7. Kasten nach Anspruch 6, wobei der unterseitige Sensor (17a) in das im Kasten (1) enthaltene Wasser eingetaucht ist und der oberseitige Sensor (17b) sich über dem Wasserfüllstand des Kastens (1) befindet.

## Revendications

1. Unité de capteur de niveau (2) pour mesurer le niveau d'eau dans un réservoir de chasse d'eau (1) d'un appareil sanitaire, comprenant un boîtier (11) muni d'une paire de joints (12, 13) raccordables à un tuyau d'entrée (14) et à un tuyau de sortie (15) respectivement ; un groupe d'alimentation électrique (21) et une unité de commande (23) munie d'un émetteur sans fil, logés dans le boîtier (11) ; une barre porteuse de capteurs (16), faisant saillie du boîtier (11) le long d'un axe longitudinal (A) ; un capteur inférieur (17a), positionné à une extrémité inférieure libre (18) de la barre (16) opposée au boîtier (11) ; et un capteur supérieur (17b), positionné à une extrémité supérieure (19) du boîtier (16) ; dans laquelle les capteurs (17a, 17b) sont des capteurs de pression configurés pour détecter les changements de pression et calculer le niveau d'eau dans le réservoir (1) par les valeurs de pression différentielle détectées par le capteur inférieur (17a), immergé dans l'eau du réservoir (1), et le capteur supérieur (17b), exposé à la pression atmosphérique ; et dans laquelle les capteurs (17a, 17b) sont reliés à l'unité de commande (23) pour transmettre les données détectées par les capteurs (17a, 17b) à l'extérieur du réservoir (1) ; et dans laquelle le groupe d'alimentation électrique (21) comprend un circuit hydraulique (29) s'étendant entre les joints (12, 13), une unité de production hydroélectrique (28), disposée le long du circuit (29), et une ou plusieurs batteries rechargeables (30) ; et le circuit (29) relie les joints (12, 13) de manière à faire circuler un flux d'eau à travers l'unité de production hydroélectrique (28).

2. Unité selon la revendication 1, dans laquelle le groupe d'alimentation électrique (21) comprend une alimentation en courant alternatif raccordable à un réseau électrique ; et/ou des batteries rechargeables au moyen d'un câble raccordable à un chargeur externe ; et/ou des batteries non rechargeables remplaçables.

3. Unité selon l'une des revendications précédentes, dans laquelle la barre (16) est articulée au boîtier (11) par une charnière (34) de manière à tourner par rapport à la barre (16) autour d'un axe de rotation (R), sensiblement perpendiculaire à l'axe longitudinal (A) de la barre (16) .

4. Unité selon l'une des revendications précédentes, dans laquelle le capteur inférieur (17a) est relié à l'unité de commande (23) par un fil (41), logé dans une cavité longitudinale (42) de la barre (16) et maintenu par une pluralité de clips (43) positionnés le long de la barre (16) et façonnés de manière à serrer le fil (41).

5. Unité selon l'une des revendications précédentes, comprenant un dispositif de fixation (24) pour fixer l'unité (2) à l'intérieur d'un réservoir de chasse d'eau (1).

6. Réservoir de chasse d'eau (1) pour un appareil sanitaire, équipé d'un capteur de niveau (2) selon l'une des revendications précédentes.

7. Réservoir selon la revendication 6, dans lequel le capteur inférieur (17a) est immergé dans l'eau contenue dans le réservoir (1) et le capteur supérieur (17b) est situé au-dessus du niveau de remplissage d'eau du réservoir (1).
